# EUROPÄISCHE PATENTSCHRIFT

(11) **EP 1 039 963 B1**
(45) Veröffentlichungstag und Bekanntmachung des Hinweises auf die Patenterteilung: **05.09.2007**
(21) Anmeldenummer: 99952443.2
(22) Anmeldetag: 08.10.1999
(51) Int. Cl.: B01D 53/32, B01J 19/08

(54) **FILTER ZUR ABSCHEIDUNG VON STICKOXIDEN UND PARTIKELN AUS EINEM GASSTROM**
FILTER FOR SEPARATING NITROGEN OXIDES AND PARTICLES FROM A GAS FLOW
FILTRE DESTINE A L'EXTRACTION D'OXYDES D'AZOTE ET DE PARTICULES D'UN FLUX GAZEUX

(30) Priorität: 08.10.1998 DE 19846320
(43) Veröffentlichungstag der Anmeldung: 04.10.2000
(73) Patentinhaber: Dickels, Karl, 82319 Starnberg (DE)
(72) Erfinder: KERZEL, Paul, D-82319 Starnberg (DE)
(86) Internationale Anmeldenummer: PCT/DE1999/003233
(87) Internationale Veröffentlichungsnummer: WO 2000/021645

(56) Entgegenhaltungen:
- EP-A- 0 627 263
- EP-A- 0 825 693
- WO-A-91/02581
- WO-A-98/15357
- US-A- 5 711 147
- DATABASE WPI Section Ch, Week 199612 Derwent Publications Ltd., London, GB; Class E36, AN 1996-110812 XP002133089 & JP 08 010564 A (MITSUI ENG & SHIPBUILDING CO), 16. Januar 1996 (1996-01-16)

## Beschreibung

Es ist bekannt, Stickoxide aus einem Gasstrom mit Temperaturen oberhalb von 150 °C abzuscheiden. Ein bekanntes Verfahren ist das SCR-Verfahren, bei dem NOₓ über einen Katalysator unter Zugabe von Ammoniak chemisch in Stickstoff und Wasser umgewandelt wird.

Im Rahmen des Umweltschutzes wird zunehmend die Forderung gestellt, Stickoxide aus einem Luftstrom mit Raumtemperatur oder Außenlufttemperatur abzuscheiden. So wird beispielsweise gefordert, die aus den Portalen von Straßentunnels austretende Fortluft von Stickoxiden zu reinigen. Die aus den Abgasen von Kraftfahrzeugen stammenden Stickoxide bestehen zu ca. 90 % aus NO und zu ca. 10 % aus NO₂. Während sich NO₂ mit bekannten Verfahren, wie z. B. Auswaschen, aus einem Gasstrom abscheiden läßt, ist eine Abscheidung von NO mit diesen Verfahren nicht möglich.

Für eine Abscheidung von Stickstoffmonoxid aus einem Gasstrom mit normalen Außentemperaturen oder Raumtemperaturen wurden deshalb in den letzten Jahren verschiedene Verfahren entwickelt. Bei einem bekannten Verfahren wird das Stickstoffmonoxid über eine Beimischung von Ozon, das mit einem Ozongenerator erzeugt wird, zu NO₂ oxidiert, das anschließend mit Kalilauge in KNO₂ und KNO₃ umgewandelt wird. Das Gas mit den Stickoxiden durchströmt bei diesem Verfahren ein mit Kalilauge getränktes wabenförmiges Trägermaterial. Nach dem Verbrauch der Kalilauge wird das Trägermaterial in Wasser ausgewaschen, mit Kalilauge getränkt und wieder in den Gasstrom eingesetzt.
Bei einem anderen bekannten Verfahren wird das Stickoxid sorptiv an einem Adsorbens gebunden. Die Regenerierung des Adsorbers erfolgt über einen getrennten Gaskreislauf. In dem Kreislauf wird ein Luftstrom auf ca. 200 °C erwärmt und durch den Adsorber geführt. Hierbei werden die Stickoxide aus dem Adsorbens freigesetzt. Die Abscheidung des NOₓ aus dem Gaskreislauf erfolgt nach dem bekannten SCR - Verfahren über einen Katalysator mit Beimischung von Ammoniak in den Luftstrom. Bei einer Stickoxidkonzentration von ca.
4 ppm muß eine Regenerierung des Adsorbens nach jeweils 40 Betriebsstunden erfolgen.

Ferner wurden Verfahren für eine mikrobiologische Abscheidung von NO aus einem Gasstrom entwickelt. Bei einem Verfahren wird das Gas durch ein mit Mikroben beaufschlagtes Trägermaterial geführt. Bei einem anderen Verfahren sind die Mikroben in einer wäßrigen Nährlösung durch eine gasdurchlässige Membrane von dem Gasstrom getrennt.

Die bekannten Verfahren weisen Defizite auf, die ihre breitere Anwendung bisher verhinderten. So erfordert das periodische Auswaschen, Tränken und Wiedereinsetzen des Trägermaterials in den Gasstrom eine umfangreiche Mechanik und Steuerung. Ein weiterer Nachteil des Verfahrens ist die Verwendung eines Ozongenerators. Infolge der sensiblen Einstellung gegenüber Ozon findet das Verfahren nur eine geringe Akzeptanz. Ferner stellt der Ozonerzeuger eine zusätzliche wartungsintensive Anlagenkomponente dar.
Bei dem anderen beschriebenen Verfahren ist die Verwendung von Ammoniak als einem ätzenden Stoff, der besondere Vorsichtsmaßnahmen bei der Handhabung erfordert, ein Hindernis. Die Aufheizung des Regenerierungsgaskreislaufs auf ca. 200 °C erfordert eine Wärmeerzeugung, die direkt oder indirekt wieder mit einer Erzeugung von Luftschadstoffen verbunden ist. Die Wärmeerzeugungsanlage stellt einen erheblichen apparativen Aufwand dar, der das Verfahren verteuert.
Bedingt durch die lange Reaktionsdauer erfordern die mikrobiologischen Verfahren ein sehr großes Bauvolumen der Filteranlage, was ihrem wirtschaftlichen Einsatz bei einem großen Gasstrom entgegensteht.

*In der Offenlegungsschrift WO 98*/*15357 ist ein Verfahren und eine Vorrichtung zur Abscheidung von Partikeln, NOx, SO2 und Hg aus dem Abgas einer mit fossilen Brennstoffen befeuerten Verbrennungsanlage beschrieben. Die Vorrichtung besteht aus einem Elektrofilter zur Abscheidung von Staub, einem nachgeschalteten Umwandler (converter) zur Oxidation von NOx, SO2 und Hg und einem anschließenden Naβ-Elektrofilter zur Abscheidung der chemischen Umwandlungsprodukte. Die im Wasser gelösten Produkte werden in einem anschlie0neden Prozeß abgetrennt. Die Vorrichtung benötigt drei separate Prozessstufen mit drei separaten Aggregaten.*

*In der* Offenlegungsschrift EP-A-0 627 263 *A1 wird eine Vorrichtung zur Abscheidung von Partikeln und NO vorgestellt, die aus einem porösen, gasdurchlässigen und elektrisch leitenden Material, und einem im Gasstrom nachgeschalteten elektrisch leitenden Gitternetz als Abscheider der Partikel besteht. Beide Gitternetze sind an die negative bzw. positive Spannung einer Gleichspannungsquelle mit einer Spannung von 12 V bis 500 V angeschlossen. Im Gasstrom weiter nachgeschaltet befindet sich ein Gitternetz aus mit Kohle beschichteten Metalldrähten oder aus Kohlefasern zur Reduktion von NO zu N2 und CO, das ebenfalls an eine Gleichspannungsquelle angeschlossen ist. Die Vorrichtung besitzt nach der Beschreibung einen Druckverlust von 18.3 mm Hg (2.400 Pa) und ist deshalb nur für kleine Abgasströme einsetzbar. Ein Einsatz der Vorrichtung für eine Reinigung von großvolumigen Luft- und Gasströmen, wie beispielsweise von Abluft aus Strassentunneln, ist wegen des hohen Druckverlustes nicht möglich. Der beschrieben Reduktionsprozess dürfte nur bei höheren Gastemperaturen eine befriedigende Umwandlungsrate ergeben. Das Verfahren ist somit für eine Reinigung von Gasen bei Umgebungstemperatur nicht geeignet.*

Die Erfindung löst die gestellte Aufgabe in einer einfacheren und kostengünstigeren Weise.
Impulse von einer Dauer bis zu wenigen Nanosekunden ermöglichen am Ionisator höhere elektrische Spannungen als bei einer Gleichspannung, ohne daß elektrische Überschläge auftreten. Wie Versuche gezeigt haben, wird hierdurch eine Bildung von Ozon in einem Gasstrom so erhöht, daß das im Gasstrom vorhandene Stickstoffmonoxid weitgehend oxidiert. Das im Ionisator gebildete NO₂ kann anschließend mit einem bekannten Verfahren aus dem Gasstrom abgeschieden werden.
Die Spannungsimpulse können mit einem Impulsgenerator erzeugt und direkt auf den Ionisator übertragen, oder in Verbindung mit einem Hochspannungsgenerator einer Basisspannung überlagert werden.
Über die Dauer und Höhe der Spannungsimpulse läßt sich die Ozonbildung und damit die Oxidation des Stickstoffmonoxids steuern.

Eine Ausgestaltung der Erfindung besteht darin, die Ozonkonzentration des Gasstromes im Ionisator über einen Ozonfühler zu messen und die Meßwerte als Eingangsgröße für einen elektronischen Regler zu verwenden, mit dem Höhe und Dauer der Spannungsimpulse gesteuert werden. Auf diese Weise ist es möglich, die Ozonkonzentration stöchiometrisch auf die für eine NO - Oxidation erforderliche Ozonmenge abzustimmen und eine Entstehung von freiem Ozon zu verhindern.

Eine weitere erfinderische Ausgestaltung ist es, vor dem Ionisator einen Vor-ionisator anzuordnen, in dem die Gasmoleküle und Partikel bereits vor ihrem Eintritt in den Ionisator elektrisch aufgeladen werden. Der Vorionisator kann aus zwei oder mehreren parallel angeordneten geerdeten Platten bestehen, zwischen denen Sprühelektroden, wie Sprühspitzen oder Sprühdrähte, quer und längs zur Strömungsrichtung nach einem vorberechneten Schema so angeordnet werden, daß ein gleichmäßiges Koronafeld entsteht. Um eine ausreichende Beladung zu erzielen, müssen die Platten eine Mindestlänge besitzen. Wird der Gasstrom zwischen die Platten geführt, erfolgt eine elektrische Aufladung der Gasmoleküle und Partikel, die in dem anschließenden Ionisator weiter erhöht wird. Mit dem Vorionisator kann die aufgebrachte elektrische Ladung ohne die Gefahr von Spannungsüberschlägen stark erhöht werden, wie Versuche gezeigt haben. Bei den Versuchen hat sich eine Ausführung der Sprühelektroden als senkrechte Stäbe mit quer angeordneten Drähten als vorteilhaft erwiesen.

Eine weitere vorteilhafte Ausgestaltung der Erfindung ist ein Einsatz eines Kohlefilters für die Abscheidung des NO₂. Wie langjährige Versuche gezeigt haben, läßt sich Stickstoffdioxid in einem Kohlefilter in einem hohen Grad abscheiden. Im Gasstrom etwa noch vorhandenes überschüssiges Ozon wird ebenfalls in dem nachgeschalteten Kohlefilter vollständig aus dem Gasstrom entfernt. Bei den Versuchen wurden bei einer NO₂-Konzentration von ca. 4 ppm, wie sie üblicherweise in der Fortluft von Straßentunnels besteht, Standzeiten des Kohlefilters von mehreren Jahren erreicht. Die Kohle läßt sich nach ihrer Beladung regenerieren und wieder in den Filter einsetzen. Eine Regenerierung ist mehrmals möglich. Die Kohle kann dann abschließend durch Verbrennung thermisch genutzt werden. Durch die Kombination mit einem einfachen vorgeschalteten Oxidationsverfahren für NO, wie oben beschrieben, ist ein einfacher und kostengünstiger Stickoxidfilter für die Lösung der anfangs beschriebenen Aufgabe geschaffen.

Der in der Erfindung eingesetzte Ionisator dient gleichzeitig auch zur elektrischen Aufladung von im Gasstrom vorhandenen Partikeln, die in dem nachgeschalteten Kollektor aus dem Gasstrom entfernt werden. Da in der Regel auch eine Abscheidung von Partikeln aus dem Gasstrom gefordert wird, bedeutet die Erfindung somit eine deutliche Reduzierung der erforderlichen Anlagenkomponenten und damit eine Verringerung der Bau- und Betriebskosten des Filters.

Neben einer Abscheidung von Stickoxiden wird mit der beanspruchten Erfindung auch eine verbesserte Partikelabscheidung erreicht. Neuere Forschungen zeigen, daß insbesondere die kleinen Partikel in der Atemluft eine hohe gesundheitsschädliche Wirkung besitzen. Es wird somit zunehmend die Forderung nach einer Abscheidung von feinen Partikeln aus Abgasströmen gefordert. Wie Messungen an einem Straßentunnel zeigten, scheiden die bisher bekannten Elektrofilter Partikel kleiner als 0,01 µm nur zu ca. 50 % ab. Mit der erfinderischen Gestaltung des Filters wird der Abscheidegrad für kleine Partikel deutlich erhöht. Mit einer Impulsspannung am Ionisator lassen sich die auf die Partikel aufgebrachten elektrischen Ladungen erhöhen, was eine verstärkte Abscheidung der kleinen Partikel im Kollektor bewirkt. Eine verstärkte Aufladung und Abscheidung der kleinen Partikeln wird auch mit dem vorgeschalteten Vorionisator erreicht.
Die in der Erfindung beanspruchte Filteranlage kann ohne einen Abscheider für NO₂ auch nur zur Abscheidung von Partikeln aus einem Gasstrom eingesetzt werden. Eine besonders vorteilhafte Anwendung der Erfindung ist ihr Einsatz für eine Abscheidung von Rauch, wie insbesondere Brandrauch, aus einem Luft- oder Gasstrom.

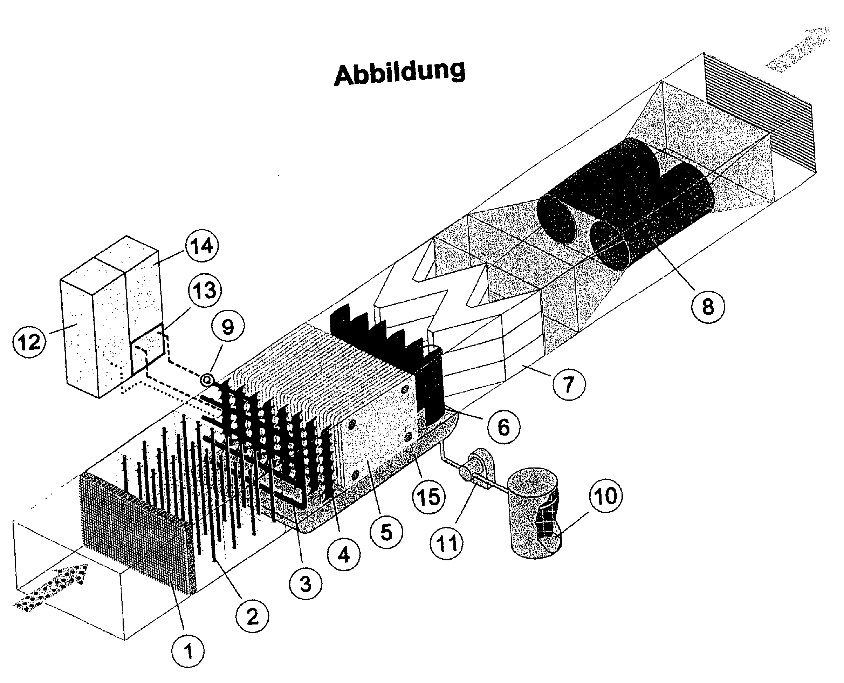

Die Abbildung zeigt beispielhaft eine Ausführungsform der Erfindung für einen Einsatz als Tunnelluftfilter zur Abscheidung von Rußpartikeln und Stickoxiden aus der Tunnelfortluft.

In einem grobmaschigen Gitter (1) werden zunächst größere Bestandteile der Fortluft, wie Laub und Insekten, zurückgehalten. Anschließend durchströmt die Luft einen Elektrofilter bestehend aus einem Ionisator (4) und einem Kollektor (5), in dem Rußund Staubpartikel zu 85 % aus dem Luftstrom entfernt werden. Ionisator (4) und Kollektor (5) sind jeweils an einen Hochspannungsgenerator (14) angeschlossen. Sind die Filterplatten des Elektrofilters mit Ruß und Staub beladen, werden sie über Sprühdüsen (3) mit Wasser gereinigt. Das in einer Wanne (15) gesammelte Waschwasser wird über eine Pumpe (11) dem Separator (10) zugeführt. Der Abreinigungsvorgang wird selbsttätig in Gang gesetzt und läuft voll automatisch ab. Die Filteranlagerungen werden in einem Separator (10) aus dem Waschwasser abgeschieden, das anschließend wieder für die Filterabreinigung verwendet wird. Während der Abreinigung wird der Elektrofilter über eine Luftklappe (6) abgeschottet.
Gleichzeitig wird in dem Ionisator (4) das Stickstoffmonoxid weitgehend in Stickstoffdioxid umgewandelt. Zu diesem Zweck ist der Hochspannungsgenerator (14) des Ionisators (4) zur Erzeugung von pulsierenden Spannungen mit einem Impulsgenerator (12) verbunden. Über einen Ozonfühler (9) wird die Ozonkonzentration im Ionisator (4) ständig gemessen. Die Ozonkonzentration dient als Eingangsgröße für einen elektronischen Regler (13), der Höhe und Dauer der im Impulsgenerator (12) erzeugten Spannungsimpulse steuert.
Ein Vorionisator (2), der vor dem Ionisator in Strömungsrichtung angeordnet ist, dient zur weiteren Erhöhung der Oxidation des Stickstoffmonoxids und einer verbesserten Abscheidung von kleinen Partikeln.
Das im Luftstrom vorhandene Stickstoffdioxid wird in einem nachgeschalteten Kohlefilter (7) abgeschieden. In dem Kohlefilter (7) werden ebenfalls in der Fortluft enthaltene unverbrannte Kohlenwasserstoffe und Benzol bis zu 90 % zurückgehalten.
Die Bewegung der Luft durch die Filteranlage erfolgt in der abgebildeten Ausführung durch Ventilatoren (8).

## Patentansprüche

1. Vorrichtung zur Abscheidung von Stickoxiden und Partikeln aus einem Gasstrom, bestehend aus einem Ionisator zur elektrischen Aufladung von Gasmolekülen und Partikeln, einem Kollektor *zur Abscheidung der Partikeln* und einem nachgeschalteten Filter zur Abscheidung von NO₂, **dadurch gekennzeichnet, daß** *in dem* Ionisator zur *elektrischen Aufladung von Gasmolekülen und Partikeln* mit einem Impulsgenerator kurze elektrische Spannungsimpulse von so hoher Spannung erzeugt werden, daß die im Gasstrom vorhandenen Stickstoffmonoxidmoleküle oxidiert werden.

2. Vorrichtung nach Anspruch 1, **dadurch gekennzeichnet, daß** die Spannungs-impulse einer Basisspannung überlagert werden.

3. Vorrichtung nach Anspruch 1 oder 2, **dadurch gekennzeichnet, daß** ein Ozonfühler zur Messung der Ozonkonzentration im Filter und ein hiermit verbundener elektronischen Regler vorhanden ist, mit dem die Ozonkonzentration durch Veränderung von Höhe und Dauer der elektrischen Spannungsimpulse steuerbar ist.

4. Vorrichtung nach einem der Ansprüche 1 bis 3, **dadurch gekennzeichnet, daß** vor dem Ionisator ein vom Gas durchströmter Vorionisator angeordnet ist, der aus zwei oder mehreren parallel angeordneten, geerdeten Platten besteht, zwischen denen Sprühelektroden nach einem vorberechneten Schema so angeordnet sind, daß ein gleichmäßiges Koronafeld entsteht.

5. Vorrichtung nach einem der Ansprüche 1 bis 4, **dadurch gekennzeichnet, daß** der Filter zur Abscheidung von Stickstoffdioxid aus Kohle besteht.

## Claims

1. Appliance for separating nitrogen oxide and particles from the gas flow, consisting of an ionizer for electrical charging of gas molecules and particles, a collector for separating particles, and a downstream filter unit for separating NO₂. A pulse generator in the ionizer generates short electrical pulses of sufficiently high voltage level in order to charge the gas molecules and particles electrically and to trigger the oxidation of nitrogen monoxide molecules which exist in the gas flow.

2. Appliance in accordance with Requirement 1, **characterized by** the superimposition of a base voltage with electrical pulses.

3. Appliance in accordance with Requirements 1 or 2, featuring an ozone sensor for measuring the concentration of ozone in the filter, plus an interconnected electronic closed-loop control which can be used to control the ozone concentration by adjusting the amplitude and duration of the electrical pulses.

4. Appliance in accordance with Requirements 1 to 3, featuring a pre-ionizing unit upstream of the ionizer. The gas flow is routed through this unit which consists of two or several grounded plates arranged in parallel, with active electrodes arranged between the plates according to a calculated scheme in order to generate a homogeneous coronary field.

5. Appliance in accordance with Requirements 1 to 4, featuring a filter carbon filter for separating nitrogen dioxide.

## Revendications

1. Dispositif pour séparer les oxydes d'azote et les particules dans un flux de gaz, se composant d'un ioniseur pour charger électriquement les molécules de gaz et les particules, d'un collecteur pour séparer les particules et d'un filtre monté en aval pour éliminer le NO₂, **caractérisé en ce que** dans l'ioniseur servant à charger électriquement les molécules de gaz et les particules, un générateur d'impulsions crée de brèves impulsions de tension électrique dont la tension est si élevée que les molécules de monoxyde d'azote présentes dans le flux de gaz sont oxydées.

2. Dispositif selon revendication 1, **caractérisé en ce que** les impulsions de tension sont superposées à une tension de base.

3. Dispositif selon revendication 1 ou 2, **caractérisé en ce que** un capteur d'ozone servant à mesurer la concentration d'ozone dans le filtre est associé à un régulateur électronique qui lui est connecté, ce régulateur servant à commander la concentration d'ozone en modifiant la valeur et la durée des impulsions de tension électrique.

4. Dispositif selon l'une des revendications 1 à 3, **caractérisé en ce que**, en amont de l'ioniseur, il est disposé un pré-ioniseur traversé par le gaz, qui est composé de deux ou plusieurs plaques disposées parallèlement et reliées à la terre, entre lesquelles des électrodes d'émission sont disposées selon un schéma précalculé, de manière à ce que soit créé un champ régulier à effet de couronne.

5. Dispositif selon l'une des revendications 1 à 4, **caractérisé en ce que** le filtre servant à séparer le dioxyde d'azote est réalisé en charbon.
